# EUROPEAN PATENT APPLICATION

(11) **EP 1 988 301 A2**
(43) Date of publication of application: **05.11.2008**
(21) Application number: 08154866.1
(22) Date of filing: 21.04.2008
(51) Int. Cl.: F16C 11/10

(54) **Coupling assembly for lighting fixtures**

(30) Priority: 30.04.2007 IT MI20070872
(71) Applicant: iGUZZINI ILLUMINAZIONE S.p.A., 62019 Recanati-Macerata (IT)
(72) Inventor: Gattari, Massimo, 62018 Potenza Picena (Macerata) (IT)
(74) Representative: De Gregori, Antonella

(57) **Abstract**

The present invention relates to a coupling assembly (10), preferably for lighting fixtures that comprises a bush (11) wherein there is seated a pin (13), the pin (13) exhibiting an outer surface (14) complementary to an inner surface (12) of the bush (11), the bush (11) and the pin (13) being reciprocally clamped by clamping means (15, 16), and is characterised in that the inner (12) and outer (14) surfaces have a truncated-cone shape.

Preferably, the coupling assembly (10) comprises at least one pre-loaded elastic element (17) between the clamping means (15, 16) and the bush (11), and/or between the clamping means (15, 16) and the pin (13), and suitable for transferring the action of the clamping means (15, 16) to the bush (11) and/or to the pin (13).

## Description

The present invention relates to a coupling assembly, preferably for lighting fixtures.

Lighting fixtures are generally provided with support elements that may be made in multiple portions (arms) kept connected in a fixed or movable manner by special coupling assemblies.

In the case of unions that allow the relative movement of the arms of the support elements, several types of articulations and/or joints already exist, capable on the one side to support the weight of a bulb socket of a lighting fixture and on the other side, to allow the movement of such bulb holder so as to arrange it in a preferential position, as well as the locking of the same in such position.

In particular, lighting fixtures are known, comprising arms with articulations free to rotate that remain into position thanks to the balances of forces and move varying such balance.

Such coupling assemblies, in the absence of external forces, keep the forces balanced employing a plurality of elements such as for example counterweights and springs. Coupling assemblies of this type therefore usually exhibit considerable overall dimensions and a relatively complex structure.

Similar problems are found in coupling assemblies for arms of lighting fixtures having discrete positions, which moreover do not allow the lighting portion to take any relative position with respect to the support elements. In such coupling assemblies, discrete positions are obtained for example through shaped surfaces and move snap-wise following forced positions. Other lighting fixtures comprise arms provided with articulations that allow the relative fixing between the arms by a screw. The relative positioning of the arms is kept through the tightening of the screw and the relative movement is only possible with loose screw.

Such articulations must always be accessible because in order to change position to the bulb socket it is first necessary to loosen the screw and then tighten it again.

Moreover, such articulations do not ensure a seal over time since the screw generally tends to loosen. Articulations for arms of lighting fixtures further exist, that use the friction between two flat surfaces connected to each other. The arms remain into position thanks to the friction force and move only if an external force is applied that acts against the friction force, overcoming it.

Such coupling assemblies exhibit several disadvantages among which the impossibility of making them of small dimensions since the surfaces cannot be made of too small dimensions in order to obtain a sufficient friction coefficient.

A further disadvantage that affects such coupling assemblies is the loss of efficacy over time due to the surface wear that causes a gradual reduction of the friction coefficient.

The object of the present invention is to obviate the disadvantages mentioned above and in particular to provide a coupling assembly for lighting fixtures which should allow being adjusted without requiring access from the outside and which should be constructed of small dimensions.

Another object of the present invention is to provide a coupling assembly for lighting fixtures which should be capable of compensating an actual loss of efficacy over time.

A further object of the present invention is to provide a coupling assembly for lighting fixtures which should keep the overall dimensions of the lighting fixture reduced as a whole.

Last but not least, another object of the present invention is to provide a coupling assembly for lighting fixtures which should allow positioning through continuous and limited movements.

These and other objects according to the present invention are achieved by producing a coupling assembly for lighting fixtures as illustrated in claim 1. Further features of the device are defined in the dependent claims.

The features and the advantages of a coupling assembly for lighting fixtures according to the present invention will appear more clearly from the following description, made by way of an indicative non-limiting example with reference to the annexed schematic drawings, wherein:

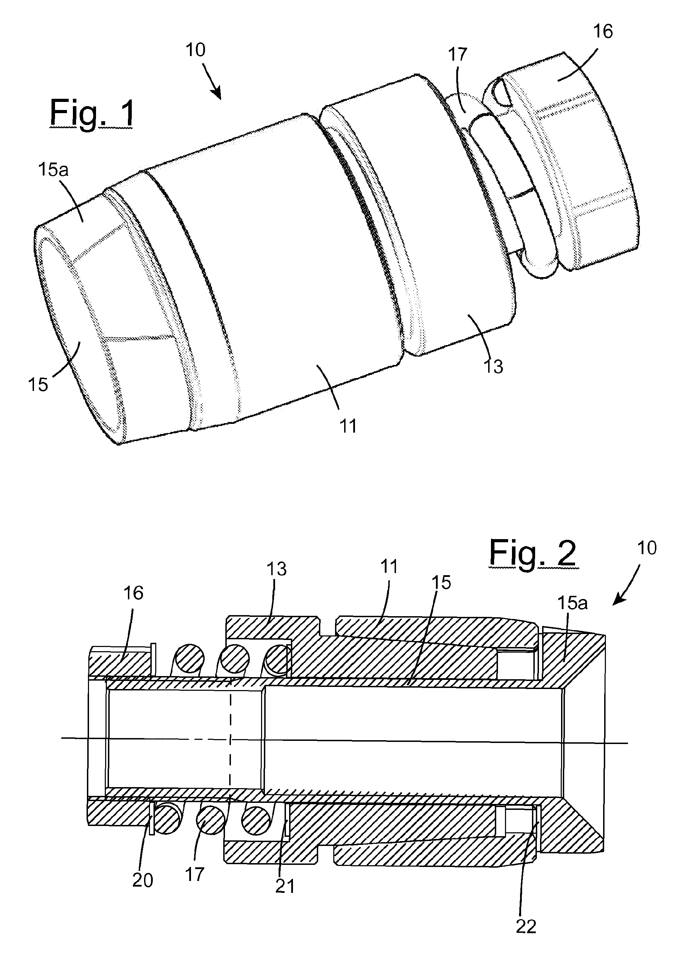

- figure 1 shows a perspective view of the coupling assembly for lighting fixtures according to the present invention;
- figure 2 shows a cross-section view of the coupling assembly for lighting fixtures of figure 1;

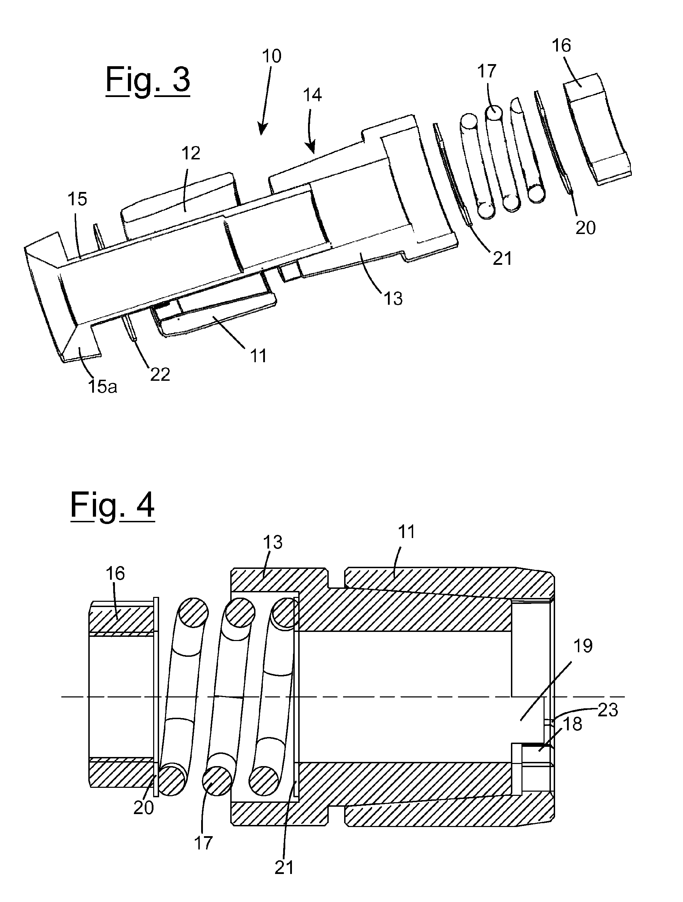

- figure 3 shows an exploded cross-section view of the component elements of the coupling assembly of figure 1;
- figure 4 shows a cross-section view of the coupling assembly for lighting fixtures without the hollow inner screw;

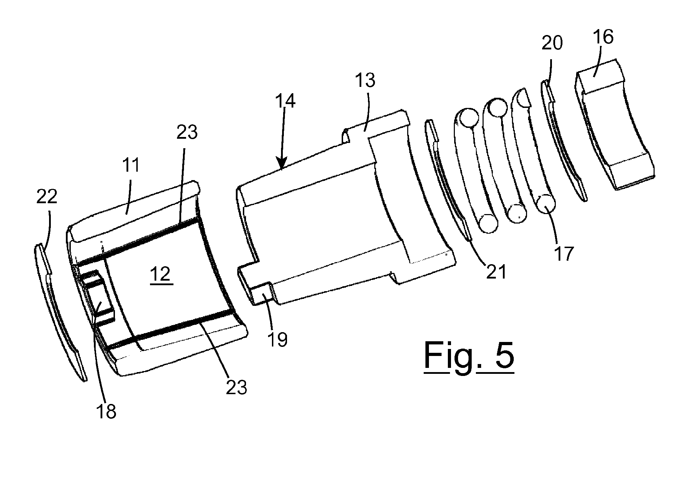

- figure 5 shows an exploded cross-section view of the elements of figure 4.

With reference to the figures, reference numeral 10 globally denotes a coupling assembly for lighting fixtures.

According to the present invention, the coupling assembly comprises a bush 11 integral to a first arm (not shown) that therein seats a pin 13 integral to a second arm (not shown).

Such coupling assembly 10 for lighting fixtures therefore is of the friction type, thus allowing a continuous adjustment of the reciprocal position of the arms without the need of directly accessing the coupling assembly.

In fact, it is sufficient to operate on the integral arms to transmit sufficient force to the assembly to overcome the friction force.

In particular, bush 11 exhibits an inner surface 12 with truncated-cone shape. In turn, pin 13 exhibits a truncated-cone outer surface 14, complementary to the inner surface 12 of bush 11.

The complementary truncated-cone surfaces 12, 14 are kept in strict contact with each other, by means of suitable clamping means 15, 16.

In the embodiment shown, the clamping means are obtained by a screw 15 passing through pin 13 and clamped at one end by a nut 16. To this end, pin 13 exhibits a through opening suitable for seating screw 15.

Head 15a of screw 15 and nut 16 cooperate respectively with bush 11 and with pin 13 so as to clamp them the one against the other.

In a totally similar manner, it is possible to make a coupling assembly 10 wherein head 15a of screw 15 cooperates with pin 13 and nut 16 with bush 11.

By the effect of the taper of the inner 12 and outer 14 surfaces, the pressing force exerted through the clamping of screw 15 with nut 16 is multiplied.

It is therefore possible to obtain a good friction coefficient also with very small surfaces 12, 14 whereto it is sufficient to apply reduced forces.

In particular, the materials for constructing bush 11 and pin 13 are selected so that the inner 12 and outer 14 surfaces exhibit different friction coefficients. When the two arms are set in rotation, a resistant torque is generated due to the friction coefficient between the inner surface 12 of bush 11 and the outer surface 14 of pin 13.

Such resistant torque allows the arms to support an equivalent weight.

Advantageously, nut 16 transmits its clamping action to pin 13 through at least one preloaded elastic element 17 between nut 16 and pin 13. In the particular embodiment, the elastic element 17 is a spring.

In totally equivalent alternative embodiments, the elastic elements 17 may be arranged between head 15a of screw 15 and bush 11 and preloaded by the same or elastic elements 17 may be provided both between nut 16 and pin and between screw 15 and bush 11.

Should the inner surface 12 of bush 11 and/or the outer surface 14 of pin 13 become worn with a consequent loss of friction between the same, such surfaces 12, 14 would yield under the force exerted by the elastic element 17 moving bush 11 and pin 13 more towards each other and thus recovering the friction torque required to the reciprocal clamping thereof.

Besides ensuring auto-regulation of the coupling assembly, the elastic element 17 offers higher flexibility in the production of coupling assemblies. In fact, it is possible to produce coupling assemblies that offer different resistant moments, through the simple replacement of the elastic element with one that exhibits a different elastic constant.

In order to reduce the wear of the inner 12 and outer 14 surfaces, such surfaces 12, 14 are preferably subject to a surface hardening treatment.

Moreover, the use of a suitable lubricant is envisaged, which besides reducing the wear of the two truncated-cone surfaces 12, 14, ensures the almost total absence of noise during the reciprocal rotation of bush 11 and pin 13, as well as an adequate friction coefficient.

To this end, at least one recess 23 suitable for seating the lubricant is provided between the inner surface 12 of bush 11 and the outer surface 14 of pin 13. Such recess 23 may be made on any one of the truncated-cone surfaces 12, 14 or on both.

Screw 15 and nut 16 preferably exhibit a through hole that allows the passage of supply cables. In this way, the overall dimensions of the lighting fixture may be reduced.

Preferably, a first mechanical stop 18, for example a tooth, is provided on the inner surface 12 of bush 11, which cooperates with a respective second mechanical stop 19, for example an abutment, provided on the outer surface 14 of pin 13.

During the rotation of the two elements bush 11 and pin 13, the mechanical stops 18, 19, being on the same trajectory, come into contact limiting the relative rotation of the two elements 11, 13 to only one portion of turn.

Finally, there are provided special antiscuff washers 20, 21, 22 at the contact points between pairs of elements that may undergo a relative rotation. In the illustrated embodiment, the pairs of elements that may undergo a relative rotation are screw 15 and bush 11, the elastic element 17 and nut 16, as well as the elastic element and pin 13.

In alternative embodiments, also nut 16 and said pin 13, as well as the elastic elements 17 and bush 11 may undergo a relative rotation.

Such washers 20, 21, 22 have the function of reducing the wear of such parts due to the friction in the relative rotation step.

The features of the device object of the invention as well as the relevant advantages are clear from the above description.

Finally, it is clear that several changes and variations can be made to the device thus conceived, all falling within the invention; moreover, all details can be replaced with technically equivalent elements. In the practice, the materials used as well as the sizes, can be whatever, according to the technical requirements.

## Claims

1. Coupling assembly (10) for lighting fixtures comprising a bush (11) wherein there is seated a pin (13), said pin (13) exhibiting an outer surface (14) complementary to an inner surface (12) of said bush (11), said bush (11) and said pin (13) being reciprocally clamped by clamping means (15, 16) **characterised in that** said inner (12) and outer (14) surfaces have a truncated-cone shape.

2. Coupling assembly (10) for lighting fixtures according to claim 1, **characterised in that** it comprises at least one pre-loaded elastic element (17) between said clamping means (15, 16) and said bush (11), and/or between said clamping means (15, 16) and said pin (13), and suitable for transferring the action of said clamping means (15, 16) to said bush (11) and/or to said pin (13).

3. Coupling assembly (10) for lighting fixtures according to claim 1 or 2, **characterised in that** said pin (13) exhibits a through opening suitable for seating said clamping means (15, 16), said clamping means (15, 16) in turn exhibiting a through hole suitable for seating at least one supply cable of the lighting fixture.

4. Coupling assembly (10) for lighting fixtures according to any one of the previous claims, **characterised in that** said inner surface (12) of said bush (11) comprises a first mechanical stop (18) and said outer surface (14) of said pin (13) comprises a second mechanical stop (19), said first (18) and said second (19) mechanical stop cooperating so as to limit a relative rotation between said bush (11) and said pin (13).

5. Coupling assembly (10) for lighting fixtures according to any one of the previous claims, **characterised in that** said inner surface (12) of said bush (11) and/or said outer surface (14) of said pin (13) comprise a recess (23).

6. Coupling assembly (10) for lighting fixtures according to any one of the previous claims, **characterised in that** it comprises at least one bush (20, 21, 22) arranged between the elements of at least one of the following pairs of elements:
- said clamping means (15, 16) and said at least one elastic element (17);
- said clamping means (15, 16) and said bush (11);
- said clamping means (15, 16) and said pin (13);
- said at least one elastic element (17) and said pin (13);
- said at least one elastic element (17) and said bush (11).

7. Coupling assembly (10) for lighting fixtures according to any one of the previous claims, **characterised in that** said inner (12) and outer (14) surfaces are subject to a surface hardening treatment.

8. Coupling assembly (10) for lighting fixtures according to any one of the previous claims, **characterised in that** said clamping means (15, 16) is a screw (15) passing through said pin (13) and clamped at an end by a nut (16).

9. Coupling assembly (10) for lighting fixtures according to claim 8, **characterised in that** said screw (15) exhibits a head (15a) suitable for cooperating with an end of said bush (11).

10. Coupling assembly (10) for lighting fixtures according to claim 8 or 9, **characterised in that** said at least one elastic element (17) is a pre-loaded spring between said nut (16) and said pin (13).
